# DEMANDE DE BREVET EUROPEEN

(11) **EP 3 588 273 A1**
(43) Date de publication de la demande: **01.01.2020**
(21) Numéro de dépôt: 19181076.1
(22) Date de dépôt: 18.06.2019
(51) Int. Cl.: G06F 8/41, G06F 8/51, G06F 16/245, G06F 16/2452, G06F 16/242, G06F 9/54, G06F 8/30

(54) **SYSTÈME DE DÉVELOPPEMENT D'UN PROGRAMME COBOL/ESQL DESTINÉ À COMMUNIQUER AVEC UN ENSEMBLE D'AU MOINS UNE BASE DE DONNÉES**

(30) Priorité: 26.06.2018 FR 1855694
(71) Demandeur: BULL SAS, 78340 Les Clayes Sous Bois (FR)
(72) Inventeur: AVAKIANTZ, Daniel, 78530 Buc (FR)
(74) Mandataire: Bonnet, Michel

(57) **Abrégé**

Ce système comporte : - une interface (130) ; - une bibliothèque logicielle (118); - un pré-compilateur (120) conçu pour remplacer chaque instruction SQL embarquée par du code de remplacement en langage COBOL comportant un appel à une routine de la bibliothèque logicielle (118) passant à la routine une instruction issue de l'instruction SQL embarquée. La routine est conçue pour envoyer à l'interface (130) un message comportant l'instruction issue de l'instruction SQL embarquée.

L'interface (130) est un serveur destiné à être connectée à un réseau informatique (110) auquel le dispositif informatique (106) est connecté et dont la routine est un client, l'interface (130) étant conçue pour relayer, en tant qu'instruction SQL, l'instruction d'au moins un du ou des messages reçus à au moins une base de données (102) de l'ensemble.

## Description

La présente invention concerne un système de développement d'un programme destiné à communiquer avec un ensemble d'au moins une base de données.

L'invention s'applique plus particulièrement à un système de développement d'un programme destiné à communiquer avec un ensemble d'au moins une base de données, chacune conçue pour recevoir des instructions SQL, comportant :
- une interface destinée à être connectée à chaque base de données de l'ensemble,
- une bibliothèque logicielle,
- un pré-compilateur conçu pour analyser un code source comportant du code principal en langage COBOL et au moins une instruction SQL embarquée et pour remplacer chaque instruction SQL embarquée par du code de remplacement en langage COBOL comportant un appel à une routine de la bibliothèque logicielle passant à la routine une instruction issue de l'instruction SQL embarquée, afin de fournir un code source pré-compilé,
dans lequel le code source pré-compilé est destiné à être compilé par un compilateur pour fournir un programme exécutable comportant le ou les appels à la routine,
dans lequel le programme exécutable et la routine appelée sont destinés à être exécutés par un dispositif informatique, et
dans lequel la routine appelée est conçue pour envoyer à l'interface un message comportant l'instruction passée avec l'appel.

La société MICROFOCUS commercialise par exemple une suite logicielle comportant un compilateur COBOL et un pré-compilateur (également appelé « processeur ») appelé OpenESQL. Le pré-compilateur est conçu pour remplacer chaque instructions SQL embarquée par du code de remplacement en langage COBOL destiné à communiquer avec un programme Java s'exécutant dans une machine virtuelle Java et connecté avec une ou plusieurs bases de données.

Un problème de cette suite logicielle est qu'il est nécessaire de développer un programme Java pour chaque programme en langage COBOL.

Par ailleurs, la demande de brevet US publiée sous le numéro US 2003/041052 A1 décrit un système comportant un client couplé à un serveur via un réseau. Le serveur comporte un système de gestion de base de données (« Database Management System » (DBMS)) communiquant avec une base de données. Le client comporte un programme comportant un outil de conversion (« conversion tool ») conçu pour convertir des instructions SQL selon le standard ODBC (« Open Database Connectivity »). Lors de cette conversion, une instruction SQL peut être remplacée par un appel à une fonction d'une librairie réalisant des appels à une bibliothèque ODBC

Un problème du système du document US 2003/041052 A1 est que le programme COBOL du client utilise la bibliothèque ODBC comme interface d'accès à la base de données. Or, la bibliothèque ODBC est accédée par appels de sorte que chaque programme doit avoir sa propre copie (instance) de la bibliothèque ODBC. Cela complique le développement du programme.

Il peut être souhaité de prévoir un système de développement d'un programme destiné à communiquer avec un ensemble d'au moins une base de données palliant au moins en partie les problèmes précités.

L'invention a donc pour objet un système de développement d'un programme destiné à communiquer avec un ensemble d'au moins une base de données, chacune conçue pour recevoir des instructions SQL, comportant :
- une interface destinée à être connectée à chaque base de données de l'ensemble,
- une bibliothèque logicielle,
- un pré-compilateur conçu pour analyser un code source comportant du code principal en langage COBOL et au moins une instruction SQL embarquée et pour remplacer chaque instruction SQL embarquée par du code de remplacement en langage COBOL comportant un appel à une routine de la bibliothèque logicielle passant à la routine une instruction issue de l'instruction SQL embarquée, afin de fournir un code source pré-compilé,
dans lequel le code source pré-compilé est destiné à être compilé par un compilateur pour fournir un programme exécutable comportant le ou les appels à la routine,
dans lequel le programme exécutable et la routine appelée sont destinés à être exécutés par un dispositif informatique, et
dans lequel la routine appelée est conçue pour envoyer à l'interface un message comportant l'instruction passée avec l'appel,
le système étant caractérisé en ce que l'interface est un serveur destiné à être connectée à un réseau informatique auquel le dispositif informatique est connecté et dont la routine est un client, l'interface étant conçue pour relayer, en tant qu'instruction SQL, l'instruction d'au moins un du ou des messages reçus à au moins une base de données de l'ensemble.

L'interface peut ainsi être utilisée par plusieurs clients. Elle est donc réutilisable par chaque programme d'ordinateur en langage COBOL développé grâce au système de l'invention. Cela simplifie le développement de chacun de ces programmes d'ordinateur puisque les développeurs n'ont pas besoin d'avoir l'interface lors du développement du programme d'ordinateur, mais simplement de la bibliothèque comportant la routine de l'invention. En outre, s'il y a besoin de modifier l'interface (par exemple pour supporter de nouveaux types de bases de données), cela se fait de manière transparente pour les programmes d'ordinateur qui continuent à utiliser la routine communiquant selon le mode client-serveur avec l'interface modifiée.

De façon optionnelle, l'interface est conçue pour :
- tenir une liste de la ou des bases données de l'ensemble à chacune desquelles l'interface a relayé une instruction d'un du ou des messages reçus de la part de la routine, demandant un accès à cette base de données,
- analyser chaque message reçu de la routine pour déterminer si l'instruction de ce message est une instruction prédéfinie, et
- si l'instruction de ce message est l'instruction prédéfinie, mettre en oeuvre une procédure de consignation de la ou des bases de données de la liste.

De façon optionnelle également, la procédure de consignation comporte :
- l'envoi, à chaque base de données de la liste, d'une première instruction SQL demandant de préparer une consignation,
- la réception, de la part de chaque base de données de la liste, d'une réponse indiquant que cette base de données est prête à mettre en oeuvre la consignation,
- suite à la réception des réponses de toutes les bases de données de la liste, l'envoi, à chaque base de données de la liste, d'une deuxième instruction SQL demandant de mettre en oeuvre la consignation.

De façon optionnelle également, l'interface est conçue pour :
- analyser chaque message reçu de la part de la routine et déterminer si ce message comporte, en plus de l'instruction, un nombre représentant un nombre maximal de résultats,
- relayer, en tant qu'instruction SQL, l'instruction du message reçu à une base de données de l'ensemble,
- recevoir de la part de cette base de données une réponse à l'instruction SQL comportant des résultats,
- filtrer les résultats pour ne garder que le nombre maximal de résultats, et
- envoyer à la routine, à la place de la réponse reçue, une réponse de remplacement comportant uniquement les résultats filtrés.

De façon optionnelle également, les résultats de la réponse sont classés selon un certain ordre, et les résultats gardés sont les premiers selon cet ordre.

De façon optionnelle également, l'interface est un programme destiné à être exécutée par un dispositif informatique connecté au réseau informatique, différent du dispositif informatique exécutant le programme et la routine appelée.

De façon optionnelle également, l'interface est un programme destiné à s'exécuter dans une machine virtuelle Java.

De façon optionnelle également, le programme formant l'interface est conçu pour communiquer avec chaque base de données de l'ensemble au travers de la bibliothèque logicielle JDBC.

De façon optionnelle également, le pré-compilateur est en outre conçu pour :
- rechercher, dans la ou les instructions SQL embarquées, une expression comportant :
   - une variable principale destinée à contenir une chaîne de caractères,
   - une variable d'indicateur destinée à contenir un nombre entier, et
   - un ou plusieurs caractères prédéfinis d'association des variables principale et d'indicateur, et
- remplacer chaque expression trouvée par du code en langage COBOL fournissant les N premiers caractères de la première variable, N étant la valeur de la variable d'indicateur.

De façon optionnelle également, le pré-compilateur est en outre conçu pour, avant la recherche dans la ou les instructions SQL embarquées de l'expression :
- rechercher, dans la ou les instructions SQL embarquées, une variable définie dans le code en langage COBOL comme étant de longueur variable,
- remplacer chaque variable de longueur variable trouvée par une expression de variable d'indicateur comportant :
   - une variable principale destinée à contenir une chaîne de caractères,
   - une variable d'indicateur destinée à contenir un nombre entier, et
   - le ou les caractères prédéfinis d'association des variables principale et d'indicateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation informatique, selon un mode de réalisation de l'invention, et
- la figure 2 illustre les étapes successives d'un procédé de développement et d'utilisation d'un programme destiné à communiquer avec un ensemble de bases de données, selon un mode de réalisation de l'invention.

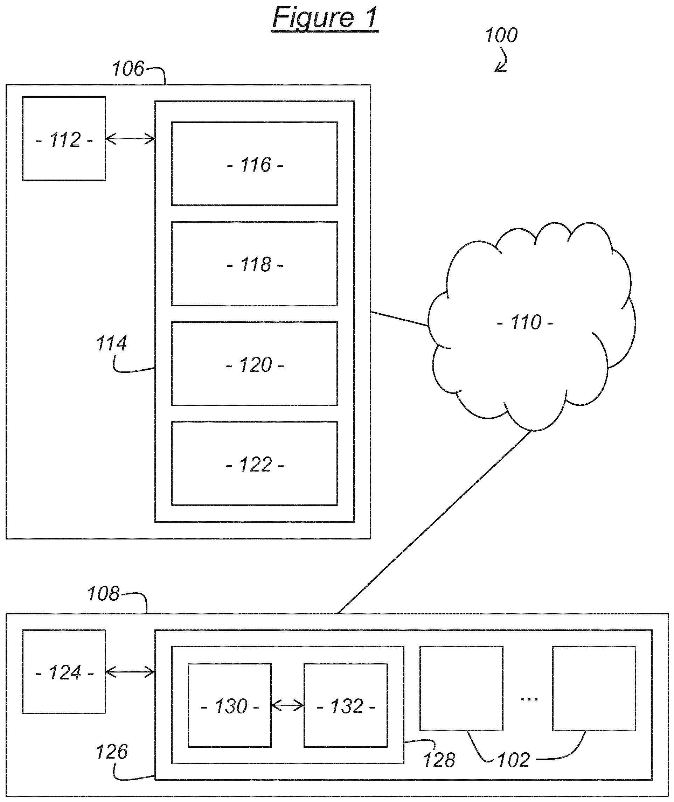

En référence à la figure 1, une installation informatique 100 mettant en oeuvre l'invention va à présent être décrite.

L'installation informatique 100 comporte un ensemble d'au moins une base de données, désignée(s) individuellement et collectivement par la référence 102, et un système de communication avec la ou les bases de données 102.

Dans la présente description, le terme « base de données » regroupe non seulement la structure informatique contenant les données, mais également le système de gestion de base de données permettant de manipuler cette structure.

Chaque base de données 102 est conçue pour recevoir des instructions SQL (de l'anglais « Structured Query Langage »). Chaque base de données est par exemple de l'un des types suivants : PostgreSQL, Oracle, MySQL, SQL Server, DB2.

Le système de communication avec la ou les bases de données 102 comporte des premier et deuxième dispositifs informatiques 106, 108, ainsi qu'un réseau informatique 110 auquel les premier et deuxième dispositifs informatiques 106, 108 sont connectés, pour leur permettre d'échanger des données. Le réseau informatique 110 est par exemple un réseau TCP/IP. En particulier, les premier et deuxième dispositifs informatiques 106, 108 présentent des adresses respectives dans ce réseau informatique 110.

Le premier dispositif informatique 106 comporte une unité centrale de traitement 112, telle qu'un microprocesseur, et une mémoire 114 dans laquelle sont enregistrés un code source 116, une bibliothèque logicielle 118 comportant au moins une routine, dite de communication, un pré-compilateur 120 (également appelé « préprocesseur ») et un compilateur 122.

Le code source 116 comporte du code en langage COBOL et au moins une instruction SQL embarquée (de l'anglais « Embedded SQL »). Chaque instruction SQL embarquée est destinée à générer une instruction SQL transmise à au moins une base de données 102 de l'ensemble. Dans le cas le plus simple, l'instruction SQL est identique à l'instruction SQL embarquée.

Le pré-compilateur 120 est par exemple écrit en langage C et peut être utilisé sur tout dispositif informatique comportant un compilateur COBOL.

Dans l'exemple décrit, le premier dispositif informatique 106 est un ordinateur central (« mainframe » en anglais) utilisant un système d'exploitation de la famille GCOS (de l'anglais « General Comprehensive Operating System »), par exemple le système d'exploitation GCOS 7.

Le deuxième dispositif informatique 108 comporte une unité centrale de traitement 124, telle qu'un microprocesseur, et une mémoire 126 dans laquelle sont enregistrés une machine virtuelle 128 (une machine virtuelle Java dans l'exemple décrit), une interface 130 destinée à être exécutée dans la machine virtuelle 128, et une bibliothèque logicielle 132 également destinée à être exécutée dans la machine virtuelle 128, sur appel de l'interface 130. L'interface 130 est ainsi écrite en langage Java et utilise la bibliothèque logicielle 132 (dans l'exemple décrit, la bibliothèque JDBC de l'anglais « Java Database Connectivity ») pour se connecter et communiquer avec chaque base de données 102 de l'ensemble. L'interface 130 est un serveur dont la routine de communication est un client.

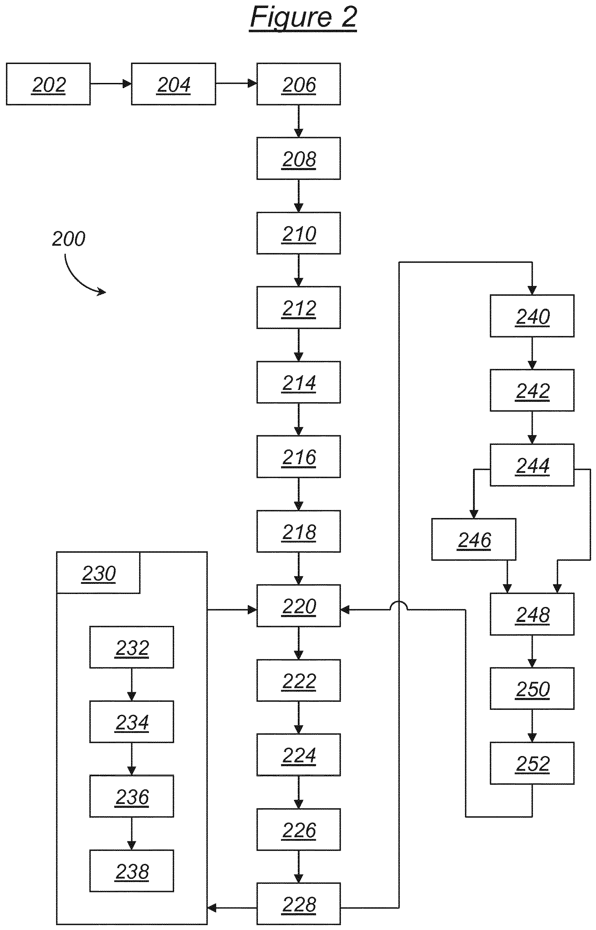

En référence à la figure 2, un procédé 200 de développement et d'utilisation d'un programme destiné à communiquer avec l'ensemble de base(s) de données 102 va à présent être décrit.

Au cours d'une étape 202, le pré-compilateur 120 obtient le code source 116 comportant la ou les instructions SQL embarquées. Chaque instruction SQL embarquée est par exemple repérée dans le code source 116 grâce à au moins une expression prédéfinie. Par exemple, chaque instruction SQL embarquée est placée entre une expression prédéfinie de début (« EXEC SQL » dans l'exemple décrit) et une expression prédéfinie de fin (« END-EXEC » dans l'exemple décrit).

Dans un premier exemple, le code en langage COBOL du code source 116 comporte la définition de deux variables NAME et ADDRESS (appartenant dans l'exemple décrit à une structure appelée SHOP) :
01 SHOP.

| | |
|---|---|
| 02 NAME | PIC X(32) VARYING. |
| 02 ADDRESS | PIC X(40) VARYING. |

En outre, le code source 116 comporte en outre l'instruction SQL embarquée :

```
 EXEC SQL
 UPDATE_SHOPS_SET_ADDRESS_ = :ADDRESS
 WHERE_NAME_ = :NAME
 END-EXEC.
```

utilisant les deux variables NAME et ADDRESS.

Dans ce premier exemple, les variables NAME et ADDRESS sont définies comme étant de longueur variable du fait de la présence d'un mot-clé prédéfini (« VARYING ») à la fin de la définition.

Dans un deuxième exemple, le code source 116 comporte l'instruction SQL embarquée suivante :

```
EXEC SQL
      AT MYDB ALTER TABLE SHOPS ADD SHOP_NAME CHAR(10)
 END-EXEC.
```

Cette instruction SQL embarquée demande d'ajouter une colonne SHOP_NAME, dont les éléments peuvent comporter jusqu'à dix caractères, à la table SHOPS de la base de données MYDB.

Dans un troisième exemple, le code source 116 comporte l'instruction SQL embarquée suivante :

```
 EXEC SQL
      FOR :NB-ROW AT MYDB SELECT SHOP_NAME, SHOP_TOWN
      INTO :SHOP-NAME-T, :SHOP-TOWN-T FROM SHOPS
 END-EXEC.
```

Cette instruction SQL embarquée demande de sélectionner les éléments les colonnes SHOP_NAME et SHOP_TOWN de la table SHOPS de la base de données MYDB, en limitant les résultats au nombre NB-ROW et en enregistrant la réponse dans les variables SHOP-NAME-T et SHOP-TOWN-T. Les variables NB-ROW, SHOP-NAME-T et SHOP-TOWN-T sont des variables définies dans la partie en langage COBOL du code source 116, en dehors de l'instruction SQL embarquée, comme indiqué par les deux points « : » qui les précèdent.

Dans un quatrième exemple, le code source 116 comporte l'instruction SQL embarquée suivante :
EXEC SQL
   COMMIT ALL
END-EXEC

Comme cela sera expliqué par la suite, cette quatrième instruction SQL embarquée vise à réaliser une consignation d'au moins une base de données 102 de l'ensemble.

Au cours d'une étape 204, le pré-compilateur 120 analyse le code source 116 pour rechercher une instruction SQL embarquée. Dans l'exemple décrit, le pré-compilateur 120 recherche la paire d'expressions prédéfinies de début et de fin et en déduit que le code placé entre elles est une instruction SQL embarquée.

Au cours d'une étape 206, le pré-compilateur 120 recherche une définition d'une variable de longueur variable utilisée dans au moins une instruction SQL embarquée trouvée. Dans l'exemple décrit, le pré-compilateur 120 détecte la présence du mot clé prédéfini (« VARYING ») dans la définition d'une variable pour déterminer que cette variable est de longueur variable.

Dans le premier exemple précédent, le pré-compilateur 120 trouve donc la définition de la variable NAME et la définition de la variable ADDRESS.

Au cours d'une étape 208, le pré-compilateur 120 remplace, dans le code en langage COBOL, chaque définition de chaque variable de longueur variable trouvée par deux définitions de respectivement deux variables : une première variable dite principale destinée à contenir une chaîne de caractères et une deuxième variable dite d'indicateur destinée à contenir un nombre entier représentant la longueur utilisée de la variable principale. Par exemple si la variable principale est une chaîne de caractère de 32 caractères et qu'elle contient un mot de 10 caractères suivi de 22 espaces, la variable d'indicateur contiendra le nombre 10.

Ainsi, dans le premier exemple précédent, les définitions des variables NAME et ADDRESS dans le code en langage COBOL sont remplacées par les définitions suivantes :
01 SHOP.
02 NAME.

| | |
|---|---|
| 49 NAME-LEN | COMP-2. |
| 49 NAME-ARR | PIC X(32) |

02 ADDRESS.

| | |
|---|---|
| 49 ADDRESS-LEN | COMP-2. |
| 49 ADDRESS-ARR | PIC X(40) |

Toujours au cours de l'étape 208, le pré-compilateur 120 remplace en outre, dans chaque instruction SQL embarquée l'utilisant, chaque variable de longueur variable trouvée par une expression de variable d'indicateur comportant les variables principale et d'indicateur associées et un ou plusieurs caractères prédéfinis d'association des variables principale et d'indicateur. L'expression de variable d'indicateur est par exemple de la forme A:B, où A est la variable principale et B la variable d'indicateur.

Ainsi, dans le premier exemple précédent, les variables NAME et ADDRESS sont remplacées respectivement par NAME-ARR:NAME-LEN et ADDRESS-ARR:ADDRESS-LEN, de sorte que l'instruction SQL embarquée devient :

```
EXEC SQL
 UPDATE_SHOPS_SET _ADDRESS_ = :ADDRESS-ARR:ADDRESS-LEN
 WHERE_NAME_ = :NAME-ARR:NAME-LEN
 END-EXEC.
```

Au cours d'une étape 210, le pré-compilateur 120 analyse à nouveau le code source 116 tel que modifié à l'étape 208 pour rechercher une expression de variable d'indicateur dans la ou des instructions SQL embarquées.

Au cours d'une étape 212, le pré-compilateur 120 remplace chaque expression de variable d'indicateur trouvée par une expression de remplacement en langage COBOL fournissant les N premiers caractères de la variable principale, N étant la valeur de la variable d'indicateur. Dans l'exemple décrit, l'expression de remplacement est A(1 :B) où A est la variable principale et B la variable d'indicateur.

Ainsi, dans le premier exemple précédent, l'expression ADDRESS-ARR:ADDRESS-LEN est remplacée par l'expression ADDRESS-ARR(1:ADDRESS-LEN) et l'expression NAME-ARR:NAME-LEN est remplacée par l'expression NAME-ARR(1:NAME-LEN), de sorte que l'instruction SQL embarquée devient :

```
 EXEC SQL
 UPDATE_SHOPS_SET_ADDRESS_ = :ADDRESS-ARR(1 :ADDRESS-LEN)
 WHERE_NAME_ = :NAME-ARR(1 :NAME-LEN)
 END-EXEC.
```

Ainsi, le pré-compilateur 120 autorise le développeur écrivant le code source 116 à utiliser, au choix, soit directement des expressions de variables d'indicateur dans les instructions SQL embarquées (traitées dans les étapes 210 et 212), soit, dans les instructions SQL embarquées, des variables de longueur variable (traitées aux étapes 206 et 208, puis aux étapes 210 et 212). Ainsi, le pré-compilateur 120 offre une souplesse de conception au développeur.

Ainsi, ce sont les N premiers caractères contenus dans la variable principale qui sont envoyés à la base de données, à la place de l'expression de forme prédéfinie comportant la variable d'indicateur, de sorte que n'importe quelle base de données peut comprendre ce qui est envoyé. Dit autrement, l'interprétation de l'expression de forme prédéfinie et le traitement de la chaîne de caractères de la variable principale qui découle de cette interprétation, qui étaient auparavant réalisés dans la base de données, sont, dans l'invention, réalisés par le programme d'ordinateur qui envoie le résultat, de sorte que la base de données n'a pas besoin d'être conçue pour réaliser cette interprétation et ce traitement.

Au cours d'une étape 214, le pré-compilateur 120 remplace chaque instruction SQL embarquée trouvée (ainsi que les expressions prédéfinies de début et de fin l'entourant) par du code de remplacement en langage COBOL.

Le code de remplacement comporte tout d'abord une première partie définissant une structure de données, nommée SQL-IO-PARAMETERS dans l'exemple décrit. La structure de données SQL-IO-PARAMETERS comporte une première variable, nommée SQL-REQUEST dans l'exemple décrit, de type chaîne de caractères et destinée à contenir une instruction issue de l'instruction SQL embarquée. La structure de données SQL-IO-PARAMETERS comporte en outre une deuxième variable, nommée SQL-FOR-VALUE dans l'exemple décrit, destinée à contenir un argument d'une clause FOR de l'instruction SQL embarquée. La structure de données SQL-IO-PARAMETERS comporte en outre une troisième variable, nommée SQL-AT-VALUE dans l'exemple décrit, destinée à contenir un argument d'une clause AT de l'instruction SQL embarquée.

Le code de remplacement comporte en outre une deuxième partie destinée à déduire une instruction depuis l'instruction SQL embarquée et à enregistrer cette instruction déduite dans la variable SQL-REQUEST. Dans l'exemple décrit, l'instruction déduite correspond à l'instruction SQL embarquée sans les clauses FOR, AT et INTO. Il sera apprécié que, dans l'exemple décrit, si l'instruction SQL embarquée ne comporte pas de clause FOR, AT ou INTO, l'instruction déduite est identique à l'instruction SQL embarquée.

Dans le premier exemple précédent, la deuxième partie du code de remplacement est :

```
 STRING
 "UPDATE_SHOPS SET_ADDRESS="
 ADDRESS-ARR(1:ADDRESS-LEN)
 " WHERE_NAME="
 NAME-ARR(1:NAME-LEN)
 DELIMITED BY SIZE INTO SQL-REQUEST
 END-STRING,
```

Ainsi, l'instruction SQL : UPDATE _SHOPS SET _ADDRESS=ADDRESS-ARR(1:ADDRESS-LEN) WHERE _NAME= NAME-ARR(1 :NAME-LEN) est enregistrée dans la variable SQL-REQUEST.

Dans le deuxième exemple précédent, la deuxième partie du code de remplacement est :

```
STRING
      "ALTER TABLE SHOPS ADD SHOP_NAME CHAR(10)"
      DELIMITED BY SIZE INTO SQL-REQUEST
 END-STRING,
```

Ainsi, l'instruction SQL : ALTER TABLE SHOPS ADD SHOP_NAME CHAR(10) est enregistrée dans la variable SQL-REQUEST.

Dans le troisième exemple précédent, la deuxième partie du code de remplacement est :

```
 STRING
      "SELECT SHOP_NAME, SHOP_TOWN"
      "FROM SHOPS"
      DELIMITED BY SIZE INTO SQL-REQUEST
 END-STRING,
```

Ainsi, l'instruction SQL: SELECT SHOP_NAME, SHOP_TOWN FROM SHOPS est enregistrée dans la variable SQL-REQUEST.

Dans le quatrième exemple précédent, la deuxième partie du code de remplacement est :

```
 STRING
      "COMMIT ALL"
      DELIMITED BY SIZE INTO SQL-REQUEST
 END-STRING,
```

Ainsi, l'instruction SQL : COMMIT ALL est enregistrée dans la variable SQL-REQUEST.

Le code de remplacement comporte en outre une troisième partie destinée à enregistrer les arguments des clauses FOR et AT dans les variables respectives SQL-FOR-VALUE et SQL-AT-VALUE.

Dans les premier et quatrième exemples précédents, la troisième partie du code de remplacement est vide puisqu'il n'y a pas de clause FOR ni de clause AT.

Dans le deuxième exemple précédent, la troisième partie du code de remplacement est :
MOVE "MYDB" TO SQL-AT-VALUE,

Dans le troisième exemple précédent, la troisième partie du code de remplacement est :
MOVE NB-ROW TO SQL-FOR-VALUE,
MOVE "MYDB" TO SQL-AT-VALUE,

Le code de remplacement comporte en outre une quatrième partie comportant un appel à la routine de communication de la bibliothèque logicielle 118 passant la variable SQL-REQUEST dans laquelle est enregistrée l'instruction extraite et les variables SQL-FOR-VALUE et SQL-AT-VALUE dans lesquelles sont enregistrés, le cas échéant, les arguments des clauses FOR et AT.

Dans l'exemple décrit, la structure SQL-IO-PARAMETERS est passée à l'appel de la routine de communication pour passer les variables SQL-REQUEST, SQL-FOR-VALUE et SQL-AT-VALUE.

Dans les quatre exemples précédents, la quatrième partie du code de remplacement est la suivante (la routine de communication ayant dans l'exemple décrit le nom SQL-CALL) :
CALL "SQL-CALL" USING SQL-IO-PARAMETERS,

Si une clause INTO est présente dans l'instruction SQL embarquée, le code de remplacement comporte en outre une cinquième partie destinée à enregistrer une réponse à l'instruction SQL embarquée dans les variables indiquées par la clause INTO.

Ainsi, dans les premier, deuxième et quatrième exemples précédents, il n'y a aucune clause INTO, de sorte que le code de remplacement ne comporte pas la cinquième partie.

Dans le troisième exemple précédent, la cinquième partie du code de remplacement est destinée à enregistrer les résultats pour la colonne SHOP_NAME dans la variable SHOP-NAME-T et les résultats pour la colonne SHOP_TOWN dans la variable SHOP-TOWN-T.

Au cours d'une étape 216, le pré-compilateur 120 fournit un code source pré-compilé, qui est entièrement en langage COBOL.

Au cours d'une étape 218, le compilateur 122 compile le code source pré-compilé pour fournir un programme exécutable composé de code machine. Ce programme exécutable comporte notamment le ou les appels vers la routine de communication de la bibliothèque logicielle 118 ayant remplacé le ou les instructions SQL embarquées.

Au cours d'une étape 220, le premier dispositif informatique 106 exécute le programme exécutable.

Au cours d'une étape 222, le premier dispositif informatique 106 atteint, dans le programme exécutable, du code machine issu de la compilation du code de remplacement d'une instruction SQL embarquée. Ainsi, en particulier, la routine de communication (quatrième partie du code de remplacement) est appelée et l'instruction déduite lui est passée ainsi que, le cas échéant, les arguments des clauses FOR et AT (contenus dans les variables SQL-FOR-VALUE et SQL-AT-VALUE).

Au cours d'une étape 224, la routine de communication envoie à l'interface 130, via le réseau informatique 110, un message comportant l'instruction déduite et, le cas échéant, les arguments des clauses FOR et AT. Ainsi, le message est envoyé à l'adresse de l'interface 130 dans le réseau informatique 110.

Au cours d'une étape 226, l'interface 130 reçoit le message envoyé par la routine de communication et l'analyse.

Au cours d'une étape 228, l'interface 130 détermine si l'instruction déduite contenue dans le message reçu est l'instruction prédéfinie : COMMIT ALL. Si c'est le cas, le procédé 200 passe à l'étape 230, sinon il passe à l'étape 240.

Au cours d'une étape 230, l'interface 130 intercepte l'instruction déduite contenue dans le message reçu et met en oeuvre une procédure de consignation de la ou des bases de données 102 appartenant à une liste maintenue à jour par l'interface 130 et listant la ou les bases de données auxquelles le programme exécutable a accédé. Une base de données 102 à laquelle le programme exécutable a accédé est une base de données 102 à laquelle l'interface 130 a transmis au moins une instruction SQL issue d'une instruction SQL embarquées ayant été remplacée dans le code source du programme exécutable. Dans l'exemple décrit, la procédure de consignation comporte les étapes 232 à 238.

Au cours d'une étape 232, l'interface 130 envoie, à chaque base de données 102 de la liste, une première instruction SQL de remplacement demandant de préparer une consignation. Dans l'exemple décrit, la première instruction SQL de remplacement est l'instruction SQL : PREPARE TO COMMIT.

Au cours d'une étape 234, chaque base de données 102 de la liste reçoit la première instruction SQL, se prépare à la consignation et envoie une réponse indiquant que cette base de données 102 est prête à mettre en oeuvre la consignation.

Au cours d'une étape 236, l'interface 130 reçoit, de chaque base de données 102 de la liste, la réponse indiquant que cette base de données 102 est prête à mettre en oeuvre la consignation.

Au cours d'une étape 238, suite à la réception des réponses de toutes les bases de données 102 de la liste, l'interface 130 envoie, à chaque base de données 102 de la liste, une deuxième instruction SQL de remplacement demandant de mettre en oeuvre la consignation. Dans l'exemple décrit, la deuxième instruction SQL de remplacement est l'instruction SQL : COMMIT. Le procédé 200 retourne alors à l'étape 220.

Au cours d'une étape 240, l'interface 130 détermine si le message reçu comporte, en plus de l'instruction déduite qu'il contient, une variable contenant un argument d'une clause FOR.

Au cours d'une étape 242, l'interface 130 relaie, en tant qu'instruction SQL, l'instruction déduite contenue dans le message reçu à la base de données 102 indiquée par l'argument de la clause AT.

Au cours d'une étape 244, cette base de données 102 reçoit l'instruction SQL, la traite et, le cas échéant, envoie à l'interface 130 une réponse à l'instruction SQL comportant des résultats classés dans un certain ordre.

Si l'interface 130 a déterminé à l'étape 240 que le message reçu comporte, en plus de l'instruction extraite, un argument d'une clause FOR, alors le procédé 200 passe à l'étape 246 suivante. Sinon, il passe à l'étape 248.

Au cours d'une étape 246, l'interface 130 intercepte la réponse à l'instruction SQL, filtre les résultats pour ne garder que le nombre maximal indiqué par l'argument de la clause FOR, et envoie à la routine de communication, à la place de la réponse interceptée, une réponse de remplacement comportant uniquement les résultats filtrés. Les résultats gardés sont les premiers suivant l'ordre de classement. Le procédé 200 passe alors à l'étape 248.

Au cours d'une étape 248, l'interface 130 relaie la réponse (avec tous les résultats ou bien seulement une partie suivant que l'étape 246 a été exécutée ou non) à la routine de communication.

Au cours d'une étape 250, la routine de communication reçoit la réponse et la met à disposition du programme.

Au cours d'une étape 252, le cas échéant, du code machine correspondant à la cinquième partie du code de remplacement est exécuté de sorte que le programme appelle à nouveau la routine de communication pour que cette dernière affecte la réponse aux variables indiquées par la clause INTO. Le procédé 200 retourne alors à l'étape 220.

Il apparaît clairement que le pré-compilateur 120 permet d'utiliser les variables d'indicateur pour n'importe quel type de base de données.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, la pré-compilation et la compilation pourraient être réalisées sur un autre dispositif informatique que le premier dispositif informatique 106. Le programme exécutable obtenu et la bibliothèque logicielle 118 seraient alors enregistrés dans la mémoire 114 du premier dispositif informatique 106 pour être exécutés.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Système informatique de développement et d'interfaçage pour l'exécution d'un programme d'ordinateur, comportant :
- un pré-compilateur (120) conçu pour :
• analyser (204) un code source (116) comportant du code principal en langage COBOL et au moins une instruction SQL embarquée, et
• remplacer (214) chaque instruction SQL embarquée par du code de remplacement en langage COBOL comportant un appel à une routine, cet appel passant à la routine une instruction SQL déduite de l'instruction SQL embarquée, afin de fournir un code source pré-compilé,
- un compilateur (122) conçu pour compiler (218) le code source pré-compilé pour fournir le programme d'ordinateur,
- une bibliothèque logicielle (118) comportant la routine appelée, cette dernière étant conçue pour envoyer (224) un message contenant l'instruction SQL déduite,
- une interface (130) conçue pour recevoir (226) le message et relayer (242) l'instruction SQL déduite contenue dans le message reçu à une base de données (102) d'un ensemble d'au moins une base de données (102),
le système étant **caractérisé en ce que** :
- l'interface (130) est un serveur destiné à être connecté, via un réseau informatique (110), à un dispositif informatique (106) d'exécution du programme d'ordinateur et de chaque appel à la routine qu'il contient, et
- la routine est un client de ce serveur.

2. Système selon la revendication 1, dans lequel l'interface (130) est conçue pour :
- tenir une liste de la ou des bases données (102) de l'ensemble à chacune desquelles l'interface (130) a relayé une instruction d'un du ou des messages reçus de la part de la routine, demandant un accès à cette base de données (102),
- analyser (228) chaque message reçu de la routine pour déterminer si l'instruction SQL déduite de ce message est une instruction prédéfinie, et
- si l'instruction de ce message est l'instruction prédéfinie, mettre en oeuvre (230) une procédure de consignation de la ou des bases de données de la liste.

3. Système selon la revendication 2, dans lequel la procédure de consignation comporte :
- l'envoi (232), à chaque base de données (102) de la liste, d'une première instruction SQL demandant de préparer une consignation,
- la réception (234), de la part de chaque base de données (102) de la liste, d'une réponse indiquant que cette base de données (102) est prête à mettre en oeuvre la consignation,
- suite à la réception des réponses de toutes les bases de données (102) de la liste, l'envoi (238), à chaque base de données (102) de la liste, d'une deuxième instruction SQL demandant de mettre en oeuvre la consignation.

4. Système selon l'une quelconque des revendications 1 à 3, dans lequel l'interface (130) est conçue pour :
- analyser chaque message reçu de la part de la routine et déterminer (240) si ce message comporte, en plus de l'instruction SQL déduite, un nombre représentant un nombre maximal de résultats,
- après avoir relayé l'instruction SQL déduite du message reçu à une base de données (102) de l'ensemble, recevoir de la part de cette base de données (102) une réponse à l'instruction SQL déduite comportant des résultats,
- filtrer (246) les résultats pour ne garder que le nombre maximal de résultats, et
- envoyer (246) à la routine, à la place de la réponse reçue, une réponse de remplacement comportant uniquement les résultats filtrés.

5. Système selon la revendication 4, dans lequel les résultats de la réponse sont classés selon un certain ordre, et dans lequel les résultats gardés sont les premiers selon cet ordre.

6. Système l'une quelconque des revendications 1 à 5, dans lequel l'interface (130) est un programme destiné à être exécutée par un dispositif informatique (108) connecté au réseau informatique (110), différent du dispositif informatique (106) exécutant le programme et la routine appelée.

7. Système selon l'une quelconque des revendications 1 à 6, dans lequel l'interface (130) est un programme destiné à s'exécuter dans une machine virtuelle Java.

8. Système selon la revendication 7, dans lequel le programme formant l'interface (130) est conçu pour communiquer avec chaque base de données (102) de l'ensemble au travers de la bibliothèque logicielle JDBC.

9. Système selon l'une quelconque des revendications 1 à 8, dans lequel le pré-compilateur (120) est en outre conçu pour :
- rechercher (210), dans chaque instruction SQL embarquée, une expression de forme prédéfinie, comportant :
• une première variable, dite principale, définie dans le code principal pour contenir une chaîne de caractères,
• une deuxième variable, dite d'indicateur, définie dans le code principal pour contenir un nombre entier N indiquant le nombre de premiers caractères contenus dans la variable principale qui sont à utiliser par la base de données (102), et
• un ou plusieurs caractères prédéfinis d'association des variables principale et d'indicateur, et
- remplacer (212) chaque expression de forme prédéfinie trouvée par du code en langage COBOL conçu, lorsqu'il est compilé par un compilateur et exécuté par un ordinateur, pour fournir les N premiers caractères contenus dans sa variable principale, de sorte que ces N premiers caractères remplacent, dans l'instruction déduite envoyée à la base de données (102), l'expression de forme prédéfinie trouvée.

10. Système selon la revendication 9, dans lequel le pré-compilateur (120) est en outre conçu pour, avant la recherche de l'expression de forme prédéfinie dans chaque instruction SQL embarquée :
- rechercher (206), dans le code principal, une définition d'une variable de longueur variable utilisée dans au moins une instruction embarquée, et
pour une variable de longueur variable dont une définition a été trouvée :
- remplacer (208) la définition trouvée par :
• une définition d'une variable principale destinée à contenir une chaîne de caractères, et
• une définition d'une variable d'indicateur destinée à contenir un nombre entier indiquant le nombre de premiers caractères contenus dans la variable principale qui sont à utiliser par la base de données (102),
- remplacer (208), dans chaque instruction SQL embarquée, la variable de longueur variable par l'expression de forme prédéfinie comportant :
• la variable principale définie pour cette variable de longueur variable,
• la variable d'indicateur définie pour cette variable de longueur variable, et
• le ou les caractères prédéfinis d'association des variables principale et d'indicateur.
